# EUROPEAN PATENT APPLICATION

(11) **EP 2 913 631 A1**
(43) Date of publication of application: **02.09.2015**
(21) Application number: 14157032.5
(22) Date of filing: 27.02.2014
(51) Int. Cl.: G01B 11/25, G01N 21/95

(54) **Test apparatus and method**

(71) Applicant: Ricoh Company, Ltd., Tokyo 104-8222 (JP)
(72) Inventor: Smith, Mark Anthony-Edward, Telford, Shropshire TF2 9NS (GB); Moule, David Jeffrey, Telford, Shropshire TF2 9NS (GB); Ogawa, Katsuji, Telford, Shropshire TF2 9NS (GB)
(74) Representative: White, Duncan Rohan

(57) **Abstract**

A method and apparatus for non-contact testing is described. The apparatus comprises a laser light source (12) arranged to project a pattern (11) onto a surface of a test piece, an imaging unit arranged to image an area of a surface of a test piece including at least a portion of a pattern projected onto the surface and to generate corresponding image data, and a processor unit (18) for receiving the image data from said imaging unit. The processor unit (18) performing an analysis to identify image data corresponding to the projected pattern and an analysis to compare at least one value of at least one parameter derived from the identified image data with at least one threshold value.

## Description

### FIELD OF THE INVENTION

The invention relates to a technique for testing articles, in particular, apparatus and methods for contactless testing of articles and components, such as, recycled articles such as toner cartridges.

### BACKGROUND

At present, toner cartridges that are returned to the manufacturer or a third party for recycling, are inspected visually to determine whether they are suitable for re-use. In particular, such cartridges include a flexible member, usually a self-adhesive Mylar™ strip, that forms a seal between a plastic moulded housing container toner powder and an organic photoconductor (OPC) drum - also known as an entrance seal. The toner cartridge may be a black toner cartridge or, more commonly in recent times, an all in one (AIO) cartridge. In the following discussion, any reference to Mylar™ (Bi-axially-oriented polyethylene terephthalate) does not preclude the use of the invention in relation to testing of any particular product made of any material. Toner cartridges themselves have multiple components that might be tested other than the entrance seal, for example, such cartridges are also equipped with a cleaning blade.

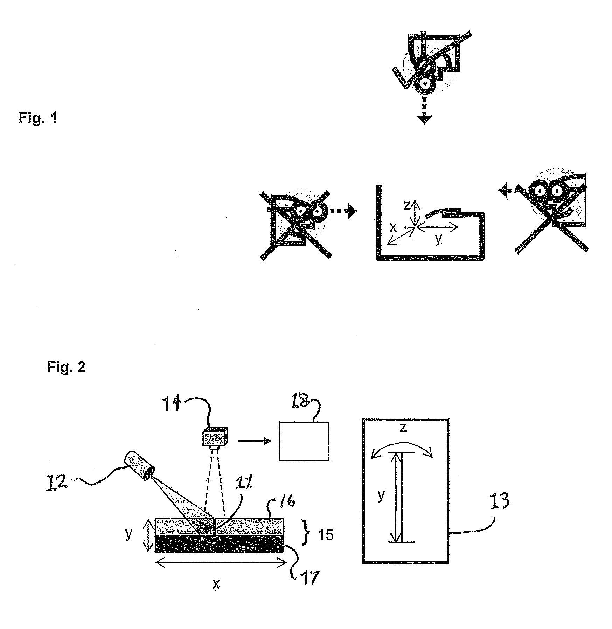

As can be seen from Figure 1, a visual inspection of such an article is possible to assess, for example, the extent of contamination (if the external surfaces are covered in toner for example), or any obvious damage to fragile members such as an entrance seal made from a Mylar™ strip, so long as these are evident from "above". No visual inspection of deformation or other issues can be discerned from the sides or ends of the article shown in figure 1 because of its enclosed nature.

In applications such as an AIO toner cartridge, the entrance seal is function critical and the cartridge cannot be reused if the entrance seal is not in proper condition. At present the returned toner cartridges are visually assessed for:
i) soiling (toner particles on the external surfaces of the entrance seal and the housing are evidence of seal failure, or may make any inspection of actual failure difficult to assess. Soiled cartridges may not be suitable for re-use due to aesthetic considerations),
ii) deformation of the entrance seal in the z axis
iii) entrance seal damage such as missing material
iv) bent or bowed or otherwise deformed housing

With regard to soiling (i) above, dysfunctional entrance seals or case bow problems have a failure condition in which toner drops out of the unit onto the paper during the print process. Alternatively, for an entrance strip, the Mylar™ makes a seal with an OPC drum, but this drum is removed prior to inspection and preliminary basic cleaning; at this stage it is very easy to soil both upper and lower surfaces of the entrance seal in waste toner prior to inspection. A soiled entrance seal detected at inspection does not necessarily mean that the entrance seal is dysfunctional, however, a soiled entrance seal cannot be reliably checked for defects ii), iii) and iv).

With regard to the difference between ii) and iv), it is important to remember that the entrance seal is partially attached across its entire length to the plastic housing. Defect ii) relates to a condition whereby the free edge (not the edge connected to the housing) takes on a permanent curved deformity. This type of deformation often occurs when the entrance seal has lost its elasticity and cannot return to its flat form when the drum is removed. Defect iv) is simply when the housing to which the Mylar™ strip of the entrance seal is attached exhibits plastic deformation. This is often the case with recycle return units as there is no control over how the customer/service engineer packs the unit for shipping to its collection centre.

It is important to distinguish between both failure type ii) and iv) because in the case of failure type ii) when the entrance seal is deformed the Mylar™ strip can be replaced, whereas for failures of type iv) failure, because the plastic housing is deformed, the whole assembly must be scrapped.

Some or all of these failure types may be suffered by components of other articles or other components in toner cartridges.

The visual assessment is time consuming, can be subjective, subject to human error, and certain defects can be difficult to assess in view of the limited viewing angles as shown in figure 1.

Replacing the visual assessment with a contact measurement assessment would risk damage to sensitive parts such as an entrance seal and risk contamination of the unit for instance with other colours of toner from previously tested units

Automating the visual assessment by a direct optical replacement would suffer from the restricted access preventing z-axis measurement which is critical for components such as a toner cartridge entrance seal.

CN-A-102147234 discloses a laser triangulation sensor in the technical field of optical measurement. The laser triangulation sensor comprises a laser, a transmitting lens group, a receiving lens group, a photosensitive device and a signal processing device, wherein the laser, the transmitting lens group and a measured target are linearly arranged at the transmitting end; the receiving lens group and the photosensitive device are arranged at the reflecting end; the receiving lens group and the photosensitive device are arranged at the same side of the laser and the transmitting lens group and are located in the same plane with the laser and the transmitting lens group; and the signal processing device is connected with the photosensitive device for receiving electric signals. In the invention, non-axisymmetrical lenses are added in the receiving lens group, so that nonlinearity of the laser triangulation sensor is corrected in principle, and the problem of non-uniform resolution is solved.

JP-A-2004028792 discloses a measurement method and a device, for inexpensively measuring a mirror body to be measured having a large curvature, even in a bad environment. A displacement gauge of a laser triangulation system, a screen on which reflected light from the body to be measured is incident, and an imaging device (which is composed of a condenser lens and a photo-detector) which measures the incident position on the screen are provided. The shape of the surface of the body to be measured is determined by measuring the distance by the displacement gauge, for an irregular reflection part of the body to be measured, and the distance of the first measurement point of the mirror part of the body to be measured is obtained, by extending the shape. For the measurement point of the mirror part, the incident angle at the measurement point is obtained by the measured distance and the incident position on the screen, and the angle (inclination) of the tangent at the measurement point is calculated. The sectional shape of the surface of the body to be measured is calculated, by successively calculating the inclination of such a tangent.

JP2010276554 discloses a method, apparatus and reference jig for discriminating measurement precision of a shape measuring instrument, for facilitating confirmation of the precision with a small amount of man-hours. For precision determination of imaging an object to be measured positioned in a visual field of a fixed breadth by irradiating the object with linear light from linear light generation means, the apparatus includes jig drive means retaining and driving a reference jig so that the reference jig formed with recesses and protrusions continuous to position an irradiating surface irradiated with linear light along the extension direction of the linear light is positioned at a target position and a holding means for holding a linear light generating means so that the irradiating surface of the reference jig is irradiated with linear light. With this configuration, the precision of the shape measuring instrument is discriminated by imaging the recesses and protrusions irradiated with the linear light with imaging means, monitor-displaying the recesses and protrusions imaged by display means on a conversion table as an image cross-sectional figure converted into actual dimensions, and comparing the displayed image cross-sectional figure and an actual recesses and protrusions figure to each other. The object appears to be to calibrate accurate measurement using patterns on the jig.

DE-A-102010036762 discloses a method and apparatus for optical measurement of empty containers in reverse vending machines using a light section triangulation. The method involves imaging an optical line on an upper surface of the measured empty container by a line projector, and selecting the image of the optical line under a triangulation angle (alpha) with an aid of a camera. The defined displacement of the optical line is evaluated. The deflections are compared to patterns to identify the empty containers. Independent claims are also included for the following: (1) an empty container return machine comprises a laser; and (2) a light section triangulation method involves measuring an optical line on an upper surface of the imaged object. Thus the purpose of the apparatus is to construct the surface configuration of an article that is previously unknown.

Thus the use of an optical triangulation method in the examination of recycled articles such as toner cartridges is not known; in particular it is not known to use such a technique for determining the integrity of an entrance seal (or other flexible member in a generally rigid article) where there is limited visual access to the component under test.

### SUMMARY

It is desirable to have a more automated, non-destructive means of testing components of articles for various conditions, for example, integrity, shape, soiling. In particular it is desirable to replace the previous manual testing method of articles, such as toner cartridges returned for recycling, with an automated method of judgement, eliminating subjectivity and reducing skill requirements.

The invention provides apparatus for non-contact testing comprising a laser light source arranged to project a pattern onto a surface of a test piece; an imaging unit arranged to image an area of a surface of a test piece including at least a portion of a pattern projected onto the surface and to generate corresponding image data; and a processor unit for receiving the image data from said imaging unit; wherein the processor unit is configured to identify image data corresponding to the projected pattern and to compare at least one value of at least one parameter derived from the identified image data with at least one threshold value.

Thus the imaged pattern can be compared with one of more different thresholds previously stored in a memory accessible to the processor unit. Thus different aspects of the imaged pattern may be compared with an expected result which may be derived from a model or from previous tests. Furthermore the model data can be improved by data acquired from performing the tests.

The laser light source may be arranged to project a pattern of laser light including at least one straight line.

The at least one parameter may be derived from one or more of, at least one dimension of at least a portion of the identified image data corresponding to the projected pattern, a peak light intensity associated with at least one point in the identified image data, a position on at least one axis of at least one point in the identified image data relative to a fixed point in the generated image data, a difference in light intensity or position on at least one axis between at least two points in the identified image data, a difference in position or light intensity between at least one point in the identified image data and a corresponding point in identified image data generated from a previously imaged area of the test surface.

A portion or a point of the image data may correspond to a portion or point in the reflected laser light if it satisfies a light threshold requirement for detection of the surface. A point in one set of image data may correspond to a point in another set of image data if it has a corresponding co-ordinate on the line (e.g. on the y-axis).

The projected pattern may include at least one straight line and the processor unit may be configured to determine a measure of the width of an image of at least a portion of the line in the generated image data. The processor unit may be configured to make the determination of the measure of the width by scanning the image data along an axis perpendicular to the expected orientation of the imaged line and setting the edges of the imaged line by comparing the pixel values of the generated image data against at least one threshold value. In alternative embodiments any of the well-known techniques for determining edges in digital images can be used.

The projected pattern may include at least one straight line and the processor unit may be configured to determine a central point of the imaged line for at least one point along the line. The processor unit may be configured to determine a central point of the imaged line for a plurality of points along the axis of the imaged line, and at least two points are compared to determine one or more of, a rate of change of deviation from a straight line, and a change in peak intensity.

The processor may be configured to measure the rate of change within consecutively processed image data frames of at least one point in the image that satisfies a light threshold requirement for detection of the surface.

Various determinations can be made by analysis of instantaneous images, that is single data set for a single projected pattern image. Plural data sets can be processed independently to make a determination in relation to one or more thresholds or standards. However, taking plural images from different areas on the surface also allows a comparison in the change in various parameters by comparing two or more than two data sets. For example, a rate in change in the length of a line of the pattern, corresponding to, for example, a 'rate of change in Mylar height' allows identification of missing material in the surface more easily.

In addition the use of historical test data from the invention when cross referenced with seal performance levels from finished product quality assurance checks allows the accurate determination of pass/fail thresholds whilst optimising yield. In a further modification of the process the analysis could be modified to 'learn' pass/fail limits from a wide sample of units.

The invention also provides a method of for non-contact testing comprising, projecting a laser light pattern onto a surface of a test piece; imaging an area of a surface of a test piece including at least a portion of a pattern projected onto the surface and generating corresponding image data; receiving the image data at a processing unit; and the processing unit performing an analysis to identify image data corresponding to the projected pattern and an analysis to compare at least one value of at least one parameter derived from the identified image data with at least one threshold value.

The projected pattern may include at least one straight line.

The at least one parameter may be derived from one or more of, at least one dimension of at least a portion of the identified image data corresponding to the projected pattern, a peak light intensity associated with at least one point in the identified image data, a position on at least one axis of at least one point in the identified image data relative to a fixed point in the generated image data, a difference in light intensity or position on at least one axis between at least two points in the identified image data, a difference in position or light intensity between at least one point in the identified image data and a corresponding point in identified image data generated from a previously imaged area of the test surface.

The projected pattern may include at least one straight line and the method may comprise determining a measure of the width of an image of at least a portion of the line in the generated image data. The determining may be performed by scanning the image data along an axis perpendicular to the expected orientation of the line and setting the edges of the imaged line image by comparing the pixel values of the image data against at least one threshold value.

The projected pattern may include at least one straight line and the method may comprise determining a central point of the imaged line for at least one point along the line. The method may comprise determining a central point of the imaged line for a plurality of points along the axis of the imaged line, and comparing the data for at least two points to determine one or more of, a rate of change of deviation from a straight line, a change in peak intensity.

The method may comprise measuring the rate of change within consecutively processed image frames of at least one point in the image data that satisfies a light threshold requirement for detection of the surface.

The invention also provides a carrier medium carrying computer readable code for controlling a computer to carry out the method of the invention.

### BRIEF DESCRIPTION OF THE DRAWINGS

Figure 1 is a schematic relating to problems with visual assessment of certain manufactured products;
Figure 2 is a schematic of a test set up in accordance with the present invention;
Figure 3 is a schematic of a perspective view of test piece and optical apparatus according to the present invention;
Figure 4 is a schematic of a perspective view of test piece and optical apparatus according to the present invention;
Figure 5 shows schematic representation of test results representative of data generated using apparatus in accordance with the present invention;
Figure 6 shows screen shots of actual displays generated by test results using apparatus in accordance with the present invention;
Figure 7 shows schematic representation of test results representative of data generated using apparatus in accordance with the present invention;
Figure 8 is a schematic of a perspective view of test piece and optical apparatus according to the present invention;
Figure 9 is a schematic of a perspective view of test piece and optical apparatus according to the present invention;
Figure 10 is a schematic of a perspective view of test piece and optical apparatus according to the present invention;
Figure 11 is a schematic of a perspective view of test piece and optical apparatus according to the present invention;
Figure 12 is a schematic of a perspective view of test piece and optical apparatus according to the present invention;
Figure 13 is a schematic of a perspective view of test piece and optical apparatus according to the present invention;

### DETAILED DESCRIPTION

The invention will be described with reference to the accompanying drawings. References to an entrance seal or Mylar™ strip are not intended to be limiting and the invention may find application in measurements on other components and products.

By using an optical triangulation technique taking samples across a component length and providing a value for the reflected light intensity across a predetermined width in each sample, a visual examination of various possible failure conditions can be replaced by a single automated, contactless test. A laser is arranged to direct a pattern of laser light, typically a straight line across a test surface so that light is reflected from a portion of interest of the surface. In the case of, for example, an entrance seal of a toner cartridge, a portion of interest may correspond to substantially the entire width of a Mylar strip forming the entrance seal. It is preferable that light reflected from at least the free edge portion of an entrance seal is detected.

In the present application references to the x, y and z directions are the direction in space as indicated on figure 2.

A light source, for example a laser light source, in particular a monochromatic "red" laser generator, may be used. A plane of a surface of a component to be tested is arranged at an angle, suitably 45°, to the light source. This provides possible measurement of y and z characteristics with respect to any given value of the x parameter. Dedicated software is used to detect image characteristics and provide real time measurements. Measurements are evaluated by sectioning the area of interest in the resultant image into, for example, ten samples. The position and distribution patterns of the pixels are used to evaluate physical characteristics. In an embodiment, 100 such images are processed across the length of component (x direction) so that a profile of the surface is produced.

In an embodiment samples along the width of the seal, ten samples in an embodiment, and the light from the light source is detected by a suitably positioned light sensor such as a CCD device. The detector is positioned so as to receive light reflected from the positioned surface. For instance if the light source is at α° to the horizontal defined by the plane of the surface under test (in the direction x indicated in figure 1) then the detector may be positioned at (α+90)°. In an embodiment the sensor is a camera with a fixed focal length and tolerates only the expected variation in z height of the test piece, for example a Mylar™ strip. In order to maintain the best focal condition the whole image is kept in focus by placing the camera directly above the test surface and the laser is positioned at an angle of incidence that may conveniently be 45 degrees. However the same principle would still apply if the sensor device was placed at other angular positions. Under these circumstances the sensor may be sensitive to a specific narrow range for focal distance. The calculation for establishing the physical measurement result would have to be amended to reflect any change in angle between the plane of the laser light and the optical axis of the camera/ sensor.

At a laser angle of 45° to the surface under test (the camera directly above), the displacement in z axis equals displacement in x axis (z=x/tanα, but tan 45°=1) and no conversion is required. However, detectable effects can be emphasized further by increasing the angle of incidence of the laser.

As shown in figure 2, in an embodiment a line is projected and this is termed the y direction. Successive lines extending in the y direction are projected and imaged on the article in different positions in the x direction. References to the x and y axes refer to a plot of the imaged results in 2-D space. Different positions on the x-axis for a particular imaged line correspond to variations in the z-direction on the surface of the test piece as explained below.

Once the detector has taken an image of the light laser light reflected from the surface under test, the surface under test is moved relative to the light source/detector arrangement either by movement of the component under test or by movement of a rig carrying the light source and detector. The actual arrangement is not important, a relative movement is preferred so that the angle of incidence of the light on the surface can be maintained whilst samples are taken across the width of the test surface from successive positions along the x direction (see figure 2). Alternatively, the angle of incidence of the light on the surface is also varied and the calculation for establishing the physical measurement result is amended accordingly for each successive position.

The results of each sample are sent to a processing device for evaluation by dedicated software and can be displayed in any convenient manner. The results could be provided in any manner including a simple pass fail indication using a visual, audio or other indication - since the components to be tested may be on a moving support, the act of sorting the components into pass and fail would be sufficient indication that the device had failed a particular test and no other indication is strictly necessary.

For some tests it may be desirable to have more information displayed and different results of analysis provided for an operator to make a decision or for calibration purposes.

In figure 2, the box on the right represents the display of the results of an analysis of a set of samples along a single line in the y-direction. Since the optical system is measuring the length of the travel path for each point along the straight line 11 generated by the laser 12, the variation in the height in the z-axis can be indicated by the deviation of the vertical line show in the display 13 in the horizontal direction. The detector 14, which may be a still microscope, camera, video camera, or any other optical sensor, receives reflected light from the surface 15 of the test article. In an embodiment the test article is an AIO toner cartridge and the test surface 15 comprises a Mylar™ strip including a "free portion" of the entrance seal 16 and a portion 17 affixed to a surface of the test article.

In an embodiment a 5mW focusing laser module with crosshair beam pattern (12mm) obtained from Odic Force Lasers was used. The device includes a laser housing with a laser diode generating a Red (650nm) laser line, a focusing lens, and a line or crosshair generator. A simple diffraction grating provides the line or cross hair and either can be used. In an embodiment a portion of one arm is used as a line projected onto the surface of a test piece and the cross hair or portions of the cross hair can be used to align the laser or the test piece. In other words, although the cross of the crosshair projected by the laser is out of the image detected by the camera, the cross hair can still be used when setting up a jig to ensure that the components that hold the test piece are positioned parallel to the moving carriage (not shown).

In an embodiment the camera, light sensor or detector 14 may use USB webcam technology. A low power microscope provides good image resolution whilst maintaining a practical distance from the surface under test. In an embodiment a Dino-lite digital microscope (AM4013MTL) having a long working distance was used having a resolution of 1280x1024 pixels (1.3 MP) and magnification in the range 20x - 90x.The output can be selected as picture, video, and time-lapsed video with a video frame rate up to 30 fps, or 15fps at 1.3MP. The possible field of view data are as follows:

| M | WD | FOV (x) | FOV (y) |
|---|---|---|---|
| 20 | 151.0 | 19.6 | 15.6 |
| 30 | 101.0 | 13.0 | 10.4 |
| 40 | 77.2 | 9.8 | 7.8 |
| 50 | 64.1 | 7.8 | 6.3 |
| 60 | 56.2 | 6.5 | 5.2 |
| 70 | 51.3 | 5.6 | 4.5 |
| 80 | 48.3 | 4.9 | 3.9 |
| 90 | 46.6 | 4.3 | 3.5 |

| | | | |
|---|---|---|---|
| M = magnification rate, WD = working distance, FOV = field of view, Unit = mm | | | |

In the embodiments the pattern projected onto the surface is a straight line; this does not preclude other patterns being projected onto the surface for detection of the reflected light. Furthermore, the light is projected from a fixed laser but the pattern could be projected by scanning a spot onto the surface and analysing the results for each individual spot. Projecting a single straight line is a simple option providing the necessary results for assessing multiple possible issues with the test surface.

The detector 14 may send a signal representing the reflected radiation from the test surface to associated software running on a suitable processor represented by 18. The software is calibrated such that the laser light reflected from the test surface is detected and the background radiation is filtered out. Because laser light intensity is significantly different to expected levels of background or ambient light the camera parameters are set so that it is sufficiently desensitised (fast shutter settings, low contrast etc). This effectively means that ambient light levels are not detected.

In an embodiment the output of the digital microscope was selected as a picture output, and is received by the processor as raw data. The processor then stores the file data conveniently as a bitmap file for analysis by an analysing unit. The analysing unit is conveniently implemented in software by the processor 18. The analysing unit scans the picture file data, *inter alia,* to provide data for a display unit (not shown) which can display the results of each test.

In an embodiment a series of pictures are taken of lines projected at regular intervals along the length of the surface. The pictures can be visually analysed by displaying the results on a display. The analysing unit may also generate further data from the data provided in the picture data provided by the detector 14.

The analysing unit scans the data provided for each test. To reduce the load on the processor, a window can be applied to the picture data so that only a portion of the picture data need be analysed. The window being applied to the portion of the data file most likely to include any data relating to the reflected laser light.

In an embodiment a Bit Map file for a test line includes RGB values with XY coordinates, for example starting from the top left of the window applied to each file. Each pixel is scanned to determine the value of the RGB data. For each row of pixels the left and right bounds of the reflected light are determined by reference to a threshold value. If scanning left to right, the left hand bound will be the first pixel having a value above a threshold (say 20 out of a possible maximum of 255 in RGB) and the right hand bound will be the last pixel having a value over the threshold. These bounds give the line thickness at that point in the y axis. The centre point is determined, for example by averaging the data between the bounds and finding the location of the peak value.

The left and right bounds can be estimated in any convenient manner with any degree of sophistication. Furthermore, it is not essential to determine the left and right bounds for each row, or even for any row, since the object is to determine if there is any deviation from the expected result. A simple comparison of the collected data with a calibration result performed on a normal surface, or even an ideal surface (for example a computer generated result) would provide a result from which useful results could be derived. If the surface is expected to be a perfectly flat surface any variation on the x-axis might signify deviation in the z-direction. Thresholds allow for natural variations and comparing sampled data along the line in the y-direction gives an indication of how the deviation in the height varies.

For example, for an ideal surface the reflected light from a known laser pattern would be expected to provide a detected pattern of a certain shape with particular dimensions; conveniently a line of a particular length and width and located in a particular position in the field of view. The amount of soiling could be determined by the thickness of the line detected; alternatively the height of the peak intensity (or the average peak intensity down the line or a portion thereof) might also be a sufficient indication that the surface is too badly contaminated to perform a useful test.

The positions of the left and right bounds give a measure of the "thickness" of the detected light line; in other words a measure of the smearing of the line on the surface and consequently a measure of the contamination or soiling of the surface. If the smearing is too great any deviation in the x-axis (horizontal location of the detected image in the field of view), indicating deflection in the z direction will be masked by the smearing and the piece will not be suitable for undergoing further tests.

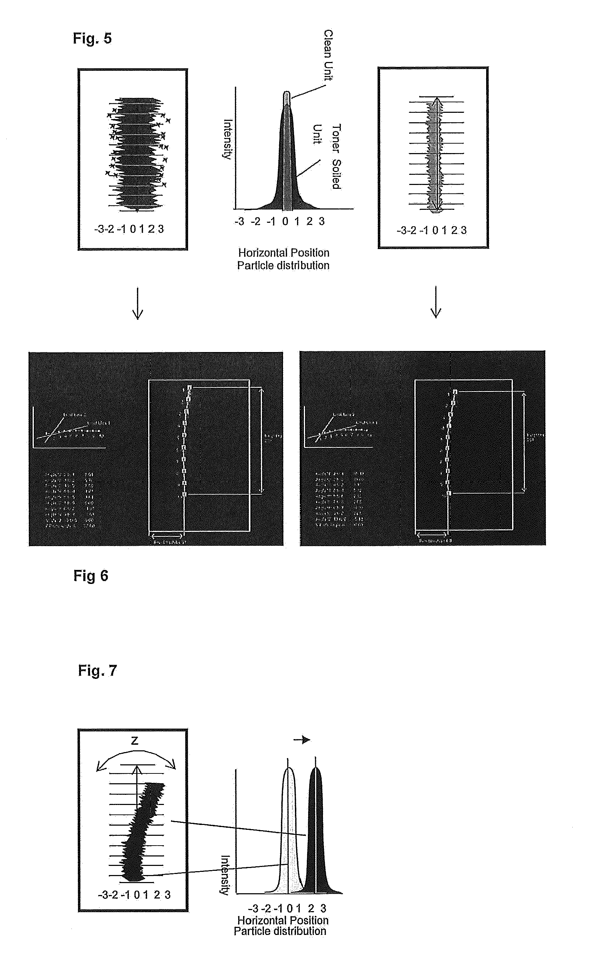

Various analyses can be made based on the data so acquired. For example, it is convenient to sample the data so that the location of the centre point of the line can be plotted. The data for the line can be split into, for example, 10 segments. Starting from one end, 10 data points can be calculated by averaging the position data for each centre point in the segment to give 10 samples as shown in figure 6. Figure 6 shows 2 exemplary screen shots equivalent to the two graphs shown in figure 5 (The smearing of the reflection is not clearly shown in Figure 6). There are ten square blocks indicating where data has been sampled numbered from number 1 at the top of the screen to number 10 at the bottom. The first sample (number 1) at the top of each window in figure 6 is plotted based on an accumulation of the results between the first and second sample positions in the Y direction. Figure 6 is provided only for an example of what the display screen might look like in an embodiment.

Plotting the results and displaying the detected image on a display can give a visual indication of the degree of variance from one end of the line 11 to the other. Display of the result is not necessary and the processor can simply determine the values for any number of samples and calculate the change in horizontal displacement, which gives an indication of variance of the actual surface in the z-direction.

In figure 2, the display 13 indicates that there is no variation in the height in the z-axis and, therefore, the display 13 shows a straight line. The display of this information is not strictly necessary, and the system could be automated to determine the variation from the vertical and compare that variation to a threshold to make a pass/ fail decision as explained below.

Obviously the representation of the display 13 is idealised in the figures. The surface may not be intended to be straight and the "correct" profile may include a deviation from the normal. The determination as to whether a test piece passes or fails a particular test would, therefore, be determined against the correct profile and, in particular, the degree of deviation, if any, from that correct profile.

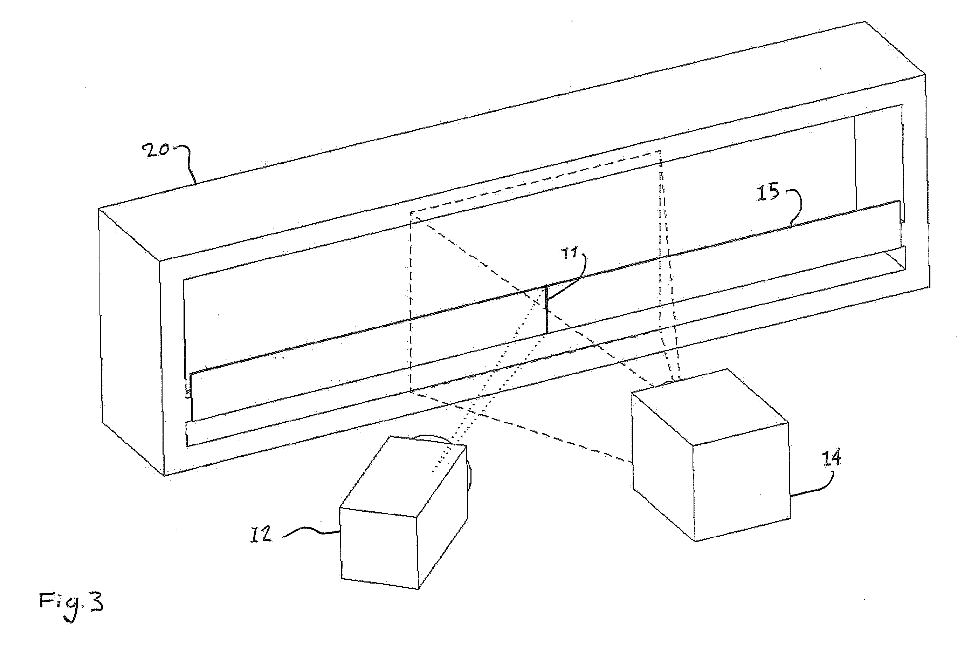

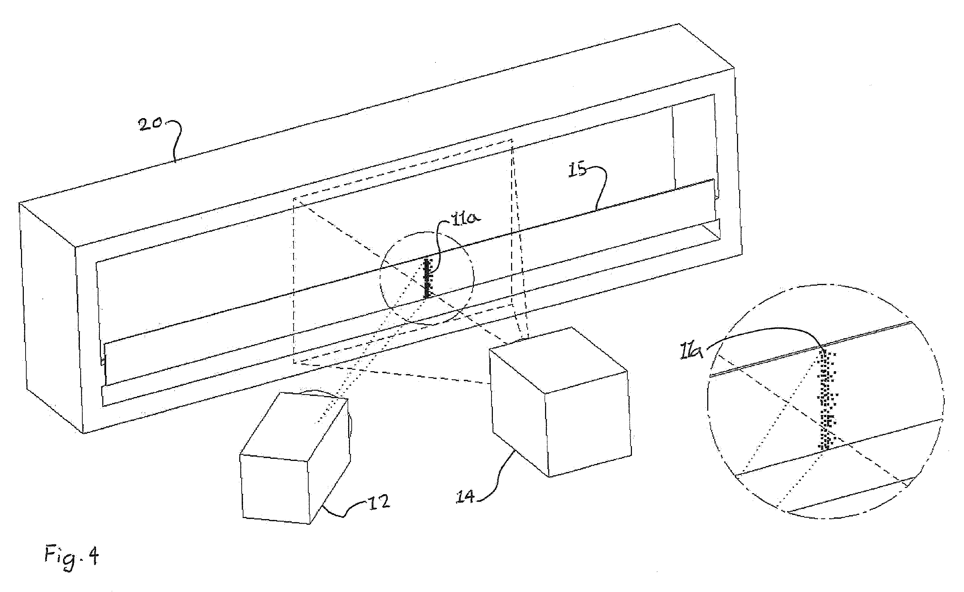

In figures 3 and 4 the test surface is shown as an entrance seal 15 of a toner cartridge 20 with the optical system shown schematically again. Line 11 represents the light pattern projected onto the test surface in figure 3. In figure 4, the reference numeral 11 a represents the scattering of the light as detected by the detector 14 and shown enlarged in figure 4.

Furthermore, the actual results would show more scattering as explained in relation to figures 5 and 6. Figure 5 indicates how the surface "looks" to the detector 14. The focused line of laser light is smeared by the test surface 15 even when the surface is free from contamination or deformation due to imperfections in any surface. Thus when determining the thresholds for deviation from the ideal this smearing is taken into account and the thresholds for deviation determined accordingly. Thus for any particular line of laser light generated in the y-direction the detector will pick up scattering of that light, which can be displayed as horizontal scattering (see figure 5). Where the surface is contaminated, for example with toner powder particles, the amount of scatter will be increased as shown on the left hand side of figure 5. The graph on the right represents and idealised result for a clean unit (no contamination) and the graph on the left indicates an example for a soiled unit.

Figure 6 is a screenshot of a display based on actual results by an apparatus set up in accordance with an embodiment of the present invention. On the right is a result for a clean surface of an entrance seal. The result shows the deviation from the vertical that is normal for an entrance seal of an AIO toner cartridge. There is a relatively constant degree of scatter either side of the notional central line (the assumed height in the z-axis). To the left is an example for a soiled surface. It may not be clear from the reproduction shown in figure 6, but whilst the entrance seal deviates from the normal in the same manner as the clean surface, approximately half way up there is a change in the amount of scattering horizontally. The bottom portion of the line with less scattering corresponds to the portion of the Mylar™ strip of the entrance seal affixed to the housing. It can be expected for soiled surfaces that there would be more soiling at the free end of the entrance strip.

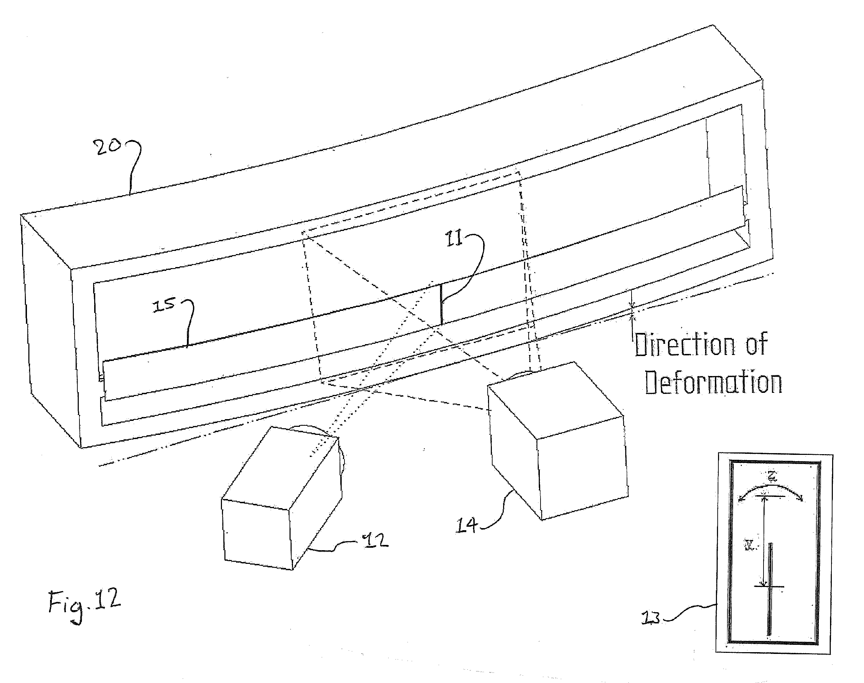

Figure 6 also shows the window applied to the bitmap file which allows certain measurements to be made relative to a fixed origin. A measurement of distance of the centre line from the origin (in this case bottom left of the window) indicates any bowing in the z-direction. Horizontal arrows in figure 6 at the bottom of the window indicate this measurement. The bottom zone is the most certain point to be associated with the plastic housing. This measurement on the x axis can be used to describe this type of bow effect. The measurement on the x-axis describes how the unit housing deforms towards or away from the camera and is manifested in the image as horizontal displacement, which signifies a change in z height of the supporting member of the housing which holds the Mylar™ strip. The measurements are taken from a fixed virtual position datum referenced visually as being the bottom left of the rectangular area shown in the image, in this case the window applied to the full image detected by the detector 14. Bow effect in the Y axis is not illustrated in figure 6 but can be measured by considering the Y co-ordinate of position 10 (Bottom most) in the laser profile image as discussed later with regard to figure 12.

A height Measurement can be extracted from the data as indicated by the vertical arrows in figure 6. In the embodiment of testing recycled toner cartridges, the height measurement is an indication of the extent to which the free end of the Mylar strip extends from the housing. The measurement can be used to determine the position of the Mylar strip in respect to how much of the strip is attached to the plastic housing. At least one position is assumed to be a reflection from the plastic housing itself and not from the Mylar strip. In any case, where the strip overlaps the housing the samples should be at the same height. In figure 6 points 6 to 9 can be assumed to be positions where the Mylar strip overlaps the housing. As the light falls on both Mylar and plastic housing the effective laser line length can be thought of as being equal to: Mylar width + width of plastic housing support member - adhesive overlap.

For each of the 10 samples calculated above an instantaneous result can be captured for each image describing the angle of each point on the line with respect to its neighbouring point, thus 9 angles are measured for 10 points. The angle made between the horizontal and a line bounded by point 1 and 10 directly can also be calculated. These points are used to show deformities or missing material etc. and overall shape of the Mylar strip.

This data is also used to help create the cross sectional view of the Mylar containing the y and z data for each image. This cross sectional view is shown in the graphs in the top left of each illustration of figure 6. The graph has no scale but the apparatus could be calibrated to a known physical scale eg. µm or mm etc. In an embodiment the apparatus uses an arbitrary pixel scale derived from known good and bad units found during a sample of units studied. Thus the graphs in figure 6 to the left of the windows indicate relative heights of each of the sampled points.

The above discussion simplifies the situation by assuming for simplicity a single threshold value for any particular determination. Multiple thresholds or limit lines might be used to make determinations as to whether a test surface meets certain criteria or not. For example, if a unit comprises a Mylar strip that is moderately curved but positioned on the plastic housing so that much of the Mylar strip protrudes the surface, this unit may have similar seal performance to a unit which has a very flat ideal Mylar strip but Mylar strip position is such that the overlap is large and effective Mylar strip protrusion away from the plastic housing is poor. Thus there may not be a definitive limit for each individual parameter such as curvature of the entrance seal, position of the entrance seal relative to the housing, and Mylar strip height. Instead, since the object is not necessarily to precisely determine shape and dimensions, but to determine whether, in the case of a used toner cartridge, whether it can be reused or refurbished, it is more suitable to optimize yield if we consider a combinational limit for functionality whereby it is feasible that one parameter to some extent compensates for less than ideal conditions of another parameter. Thus limit lines are designed to consider such combinations for the purpose of making pass/ fail judgements. In other words, although a particular test result might indicate a failure condition, it might in fact be possible to reuse the product (e.g. a toner cartridge).

If the surface is too badly soiled, it may be impossible to tell whether any of the other requirements of the test surface are met. If the test article or surface is not soiled, either because it is not prone to contamination, or because it has passed the above test, further tests or analyses of the test data can be performed.

Figure 7 shows an idealised result for a test surface that is deformed towards its "free end". By which is meant that the representation of the result for deviation in the z-direction shows that the surface at the particular point in the x-direction is warped, for example downwards, towards its free end. In the case of an entrance strip, the free end is the side of the strip that is not affixed to the housing. Figure 7 can be compared with Figures 2 and 4, which show no deviation in the z-axis. Further, Figure 7 exemplifies the deviation in the z-direction that is evident in spite of the normal scattering in the z-direction due to surface effects. The graph on the right of figure 7 indicates how the total intensity of light is shifted horizontally to the right for samples nearer the free end of the strip, indicating a deviation in the z-direction caused by deformation at the free end of the test surface.

It can be seen from Figure 7 that a determination can be made as to the deformation in the z-direction by calculating the shift (horizontally or x-axis) in the peak intensity for each of the samples taken in the y-direction from the data received from the detector. A suitable threshold can be set to determine whether the horizontal shift in the peak intensity, whether positive or negative is excessive. Of course, instead of the peak intensity, an estimate could be made of the line centre based on the positions of the left and right bounds of the detected light.

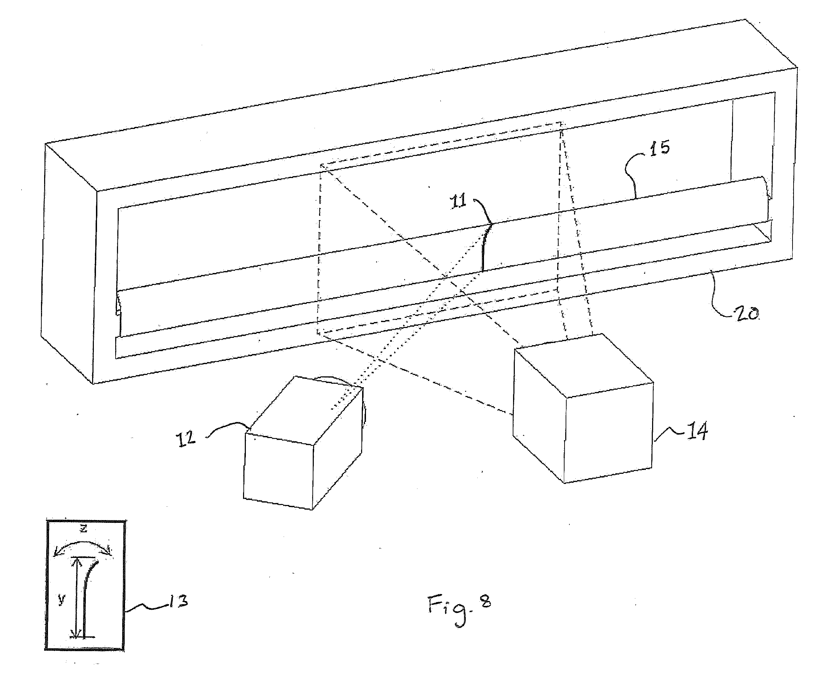

Figure 8 shows a toner cartridge 20 in which an entrance seal 15 being the surface under test has a free end warped downwardly (away from the camera lens). Because of the angle of the camera the line 11 of laser light detected by detector 14 appears to curve generating a display 13 where the deviation in the z-direction is shown as a deviation on the x-axis.

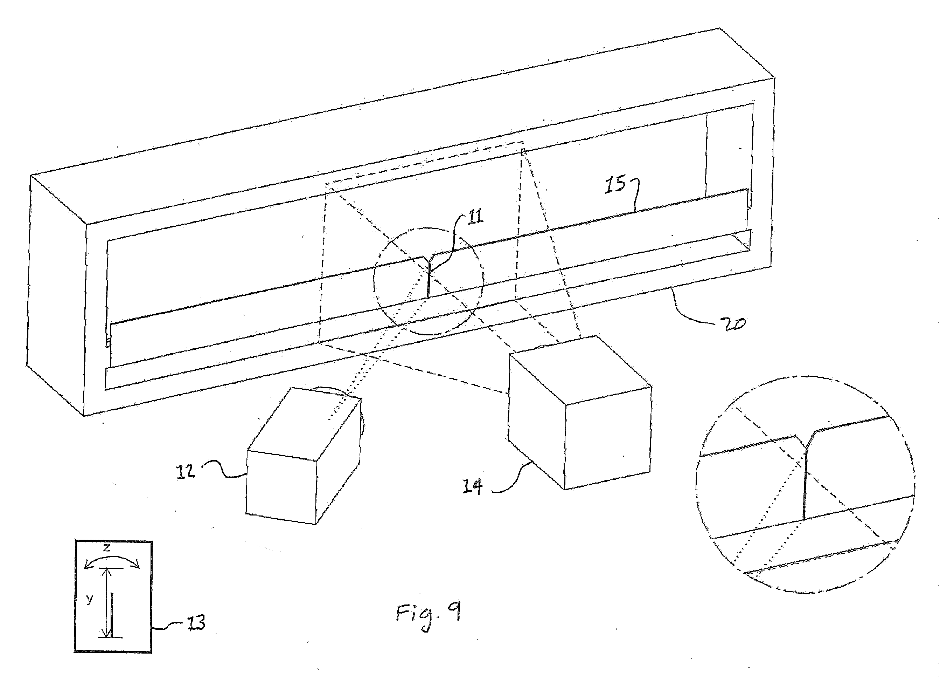

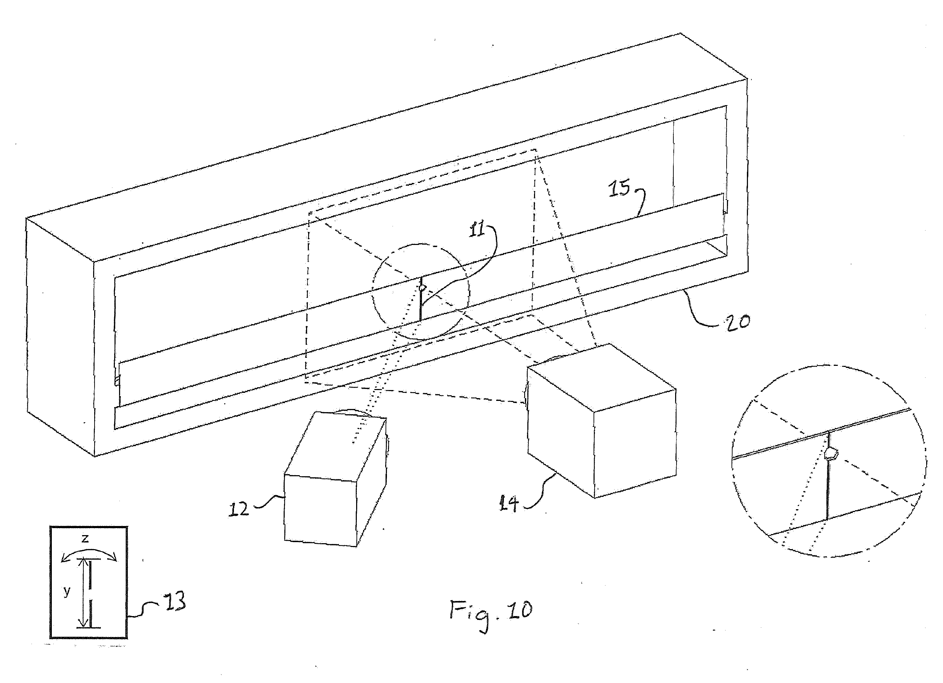

Figures 9 and 10 demonstrate results that indicate whether the surface is damaged. Obviously, for any seal member it is important that the seal be complete. Figure 9 shows a common defect in entrance seals where a portion of the free end of the strip is missing. In figure 10 a central portion of the entrance strip has been damaged. In each case the surface will not reflect a complete line of the laser light and the detector will pick up an incomplete line. A visual indication of this can be displayed 13, as shown in figures 9 and 10. The software can be arranged to determine whether there is any damage to the surface in terms of missing material either by determining whether any of the samples show a null result, or an intensity below a threshold, or if the total intensity of light across the samples is below a threshold - the samples being taken from the peak intensity at regular intervals along the y direction.

For missing material in the form of a hole in the test surface the intensity of light below a threshold may be detected. More commonly missing material at the free edge of the entrance seal is also detected using a software function which measures rate of change within consecutively processed image frames by considering the y coordinate of the upper most reading that satisfies the light threshold requirements for detection of the surface (different surfaces will have different reflectivity for the light source and therefore a different threshold). Any calculation that provides a significant change in Y value of the upper most measured position above a certain threshold will indicate missing material at the free edge. In other words, a calculation that provides a change in height above a certain threshold will be most likely irreparably damaged.

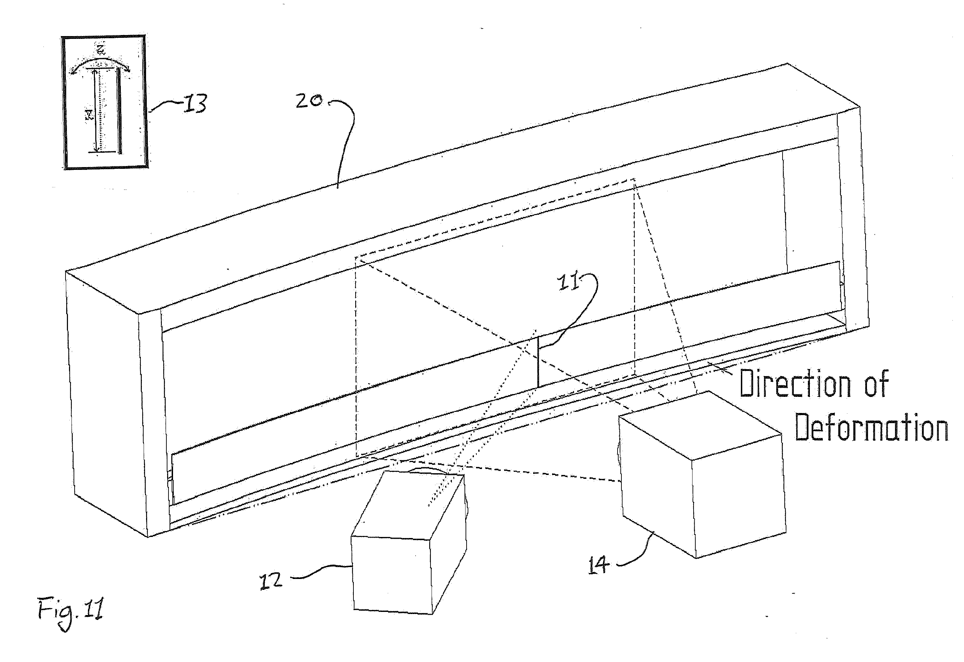

Figures 11 and 12 show another common defect for articles including the housing portion to which an entrance seal is affixed. A portion of the housing is bowed or otherwise deformed, causing deviation of the surface in either the z direction or the y direction. In the case of a toner cartridge seal entrance, the housing portion is a fixed width and the laser line can be longer than the fixed width thereby detecting shifts in the y direction in either direction. In figure 11 the housing has been deformed such that it bows away from the lens of the detector 14 so that the entire image of the projected line 11 is further away from the sensor than would be expected and the line will be shifted horizontally as discussed in relation to figure 6 above. In this case since there is no deviation of the line itself (it projects as a straight line) it is impossible to tell by analysing the points on the line relative to each other that there is a problem. Instead, for each test, since the optical field of the detector 14 is stationary relative to the laser, the position of the line in the optical field can expected to have the same position on the axis for each test (conveniently the test piece is moved relative to the optical system rather than moving the optical system although both options would achieve the same effect). Thus in figure 11 the dotted line in the display window 13 indicates where the reflected line should have appeared in the window 13 and the shift of the entire line even though it is straight will indicates bowing away from the lens. A shift to the left would indicate a bowing towards the detector 14. Since, a series of tests, basically imaging the projected laser line at a plurality of point along the x direction (figure 2) will give a series of results for the position of the line on the x-axis and the deviation of the line can be plotted or otherwise analysed to determine whether the variation in the movement of the detected line on the x-axis exceeds one or more thresholds (e.g. a deviation greater than a threshold maximum deviation, or a rate of deviation greater than a threshold rate).

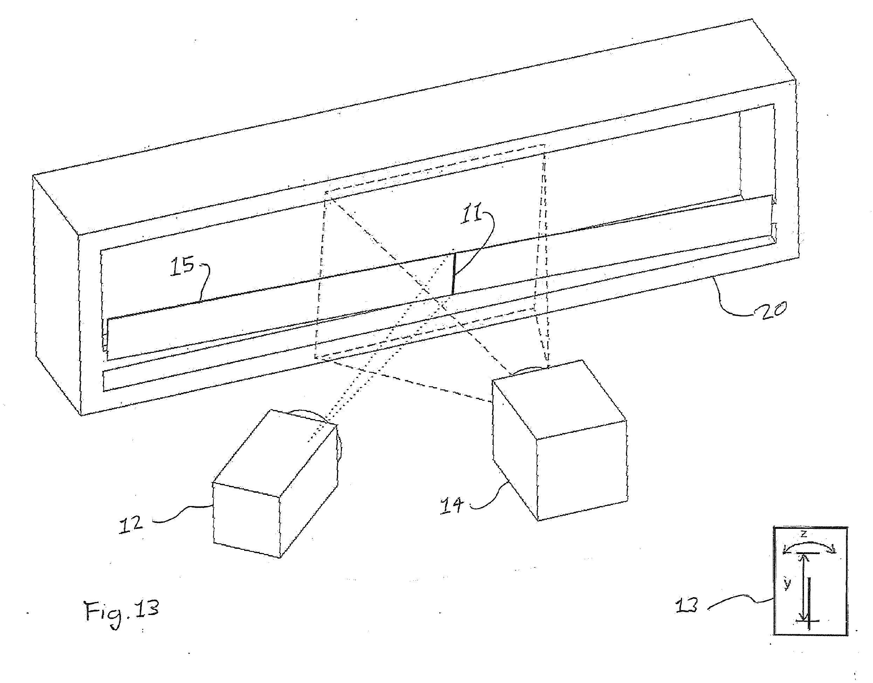

Conversely, in figure 12, the housing 20 is bowed in the plane parallel to the field of view of the detector 14. In other words the housing 20 bows in the y direction (figure 2). In this case the reflected light appears also to move in the y direction relative to the expected location of the line in the display window 13. Again comparison of the data for the series of tests along the x-direction will provide sufficient information to determine the extent and type of deformation. In particular, it is possible to distinguish between a deformation in the surface due to deformation of the housing 20 and, for example, an incorrectly orientated seal member 15 as shown in figure 13.

Figure 13 shows an illustration whereby the entrance seal 15 has not been set correctly to the housing 20 during original unit assembly. This issue is reasonably rare; the test uses the same detection mechanism as if there was missing material on the free edge of the entrance seal. The single result shown in the display window 13 of figure 13, could in isolation be mistaken for either a missing portion at the free end (cf. figure 9) or deviation of the surface in the y-direction (c.f. figure 12). A series of results alsong the x-direction will allow the apparatus to determine the type of failure. This function demonstrates the utility of the present invention in other applications such as during the manufacturing process where the technique could be used for checking newly positioned entrance seals.

Thus, the apparatus and method of the present invention find utility in various commercial settings, including recycling of components, and manufacturing new articles.

Whilst the invention has been described with reference to certain exemplary embodiments, the invention is not so limited and variations will suggest themselves to the skilled person without departing from the scope of the invention as defined in the appended claims.

## Claims

1. Apparatus for non-contact testing comprising:
a laser light source arranged to project a pattern onto a surface of a test piece;
an imaging unit arranged to image an area of a surface of a test piece including at least a portion of a pattern projected onto the surface and to generate corresponding image data; and
a processor unit for receiving the image data from said imaging unit;
wherein the processor unit is configured to identify image data corresponding to the projected pattern and to compare at least one value of at least one parameter derived from the identified image data with at least one threshold value.

2. Apparatus as claimed in claim 1, wherein the at least one parameter is derived from one or more of:
at least one dimension of at least a portion of the identified image data corresponding to the projected pattern,
a peak light intensity associated with at least one point in the identified image data,
a position on at least one axis of at least one point in the identified image data relative to a fixed point in the generated image data,
a difference in light intensity or position on at least one axis between at least two points in the identified image data,
a difference in position or light intensity between at least one point in the identified image data and a corresponding point in identified image data generated from a previously imaged area of the test surface.

3. Apparatus as claimed in claim 1 or 2, wherein the projected pattern includes at least one straight line and the processor unit is configured to determine a measure of the width of an image of at least a portion of the line in the generated image data.

4. Apparatus as claimed in claim 3 wherein the processor unit is configured to make the determination of the measure of the width by scanning the image data along an axis perpendicular to the expected orientation of the line and setting the edges of the imaged line by comparing the pixel values of the image data against at least one threshold value.

5. Apparatus as claimed in any one preceding claim wherein the projected pattern includes at least one straight line and the processor unit is configured to determine a central point of the imaged line for at least one point along the line.

6. Apparatus as claimed in claim 5, wherein the processor unit is configured to determine a central point of the imaged line for a plurality of points along the axis of the imaged line, and at least two points are compared to determine one or more of, a rate of change of deviation from an expected orientation of the imaged line, and a change in peak intensity.

7. Apparatus as claimed in any one preceding claim wherein the processor is configured to measure the rate of change within consecutively processed image data frames of at least one point in the image that satisfies a light threshold requirement for detection of the surface.

8. A method of for non-contact testing comprising:
projecting a laser light pattern onto a surface of a test piece;
imaging an area of a surface of a test piece including at least a portion of a pattern projected onto the surface and generating corresponding image data;
receiving the image data at a processing unit; and
the processing unit performing an analysis to identify image data corresponding to the projected pattern and an analysis to compare at least one value of at least one parameter derived from the identified image data with at least one threshold value.

9. A method as claimed in claim 8 wherein the at least one parameter is derived from one or more of:
at least one dimension of at least a portion of the identified image data corresponding to the projected pattern,
a peak light intensity associated with at least one point in the identified image data,
a position on at least one axis of at least one point in the identified image data relative to a fixed point in the generated image data,
a difference in light intensity or position on at least one axis between at least two points in the identified image data,
a difference in position or light intensity between at least one point in the identified image data and a corresponding point in identified image data generated from a previously imaged area of the test surface.

10. A method as claimed in any one of claims 8 or 9, wherein the projected pattern includes at least one straight line and the method comprises determining a measure of the width of an image of at least a portion of the line in the generated image data.

11. A method as claimed in claim 10 wherein said determining is performed by scanning the image data along an axis perpendicular to the expected orientation of the line and setting the edges of the imaged line image by comparing the pixel values of the image data against at least one threshold value.

12. A method as claimed in any one of claims 8 to 11, wherein the projected pattern includes at least one straight line and the method comprises determining a central point of the imaged line for at least one point along the line.

13. A method as claimed in claim 12, and comprising determining a central point of the imaged line for a plurality of points along the axis of the imaged line, and comparing the data for at least two points to determine one or more of, a rate of change of deviation from an expected orientation of the imaged line, and a change in peak intensity.

14. A method as claimed in any one of claims 8 to 13, comprising measuring the rate of change within consecutively processed image frames of at least one point in the image data that satisfies a light threshold requirement for detection of the surface.

15. A carrier medium carrying computer readable code for controlling a computer to carry out the method of any one of claims 9 to 16.
